# DEMANDE DE BREVET EUROPEEN

(11) **EP 2 592 739 A1**
(43) Date de publication de la demande: **15.05.2013**
(21) Numéro de dépôt: 12191194.5
(22) Date de dépôt: 05.11.2012
(51) Int. Cl.: H02M 1/42

(54) **Convertisseur de puissance doté d'une source de courant commandée employant un transistor à effet de champ normalement fermé**

(30) Priorité: 14.11.2011 FR 1160307
(71) Demandeur: Schneider Toshiba Inverter Europe SAS, 27120 Pacy sur Eure (FR)
(72) Inventeur: Barauna, Allan Pierre, 27200 Vernon (FR)
(74) Mandataire: Bié, Nicolas

(57) **Abrégé**

L'invention concerne un convertisseur de puissance comportant notamment une résistance de limitation (RL) et une source de courant commandée comportant un transistor (T1) de type à effet de champ normalement fermé, réalisé dans un matériau à grande énergie de bande interdite et commandé par un dispositif de commande (CT1) de Grille. Le convertisseur de puissance comporte également une source de démarrage (Sd) connectée en parallèle de la résistance de limitation (RL) et du dispositif de commande (CT1) de Grille du transistor (T1) et agencée pour se charger par une tension négative lors du démarrage du convertisseur de puissance.

## Description

### Domaine technique de l'invention

La présente invention se rapporte à un convertisseur de puissance doté d'une source de courant commandée employant un transistor à effet de champ normalement fermé.

### Etat de la technique

De manière connue, un convertisseur de puissance peut comporter :
- un module redresseur situé en entrée et connecté à une source de tension alternative, telle que par exemple le réseau de distribution électrique, le module redresseur étant composé en règle générale d'un pont de diodes destiné à redresser la tension alternative fournie par le réseau de distribution électrique,
- un bus continu d'alimentation connecté au module redresseur et sur lequel est appliquée une tension redressée, le bus continu d'alimentation comportant une ligne d'alimentation positive et une ligne d'alimentation négative,
- un ou plusieurs condensateurs de bus permettant de maintenir la tension du bus continu d'alimentation à une valeur constante.

Le convertisseur de puissance peut également comporter en sortie un module onduleur destiné à appliquer une tension variable à une charge électrique à commander.

Il est également connu de doter un convertisseur de puissance d'une source de courant commandée permettant de réduire les harmoniques du courant d'entrée fourni par le réseau et ainsi de réduire le taux de distorsion harmonique en courant (THDi pour "Total Harmonic Distortion of Current") en contrôlant le courant circulant sur le bus continu d'alimentation. La source de courant commandée comporte en règle générale une inductance connectée en série sur la ligne positive du bus continu d'alimentation, une diode connectée sur la ligne d'alimentation positive du bus à ladite inductance et au condensateur de bus et un transistor connecté à l'inductance et à la ligne d'alimentation négative du bus continu d'alimentation, en parallèle du condensateur de bus. Pour sa capacité à découper la tension à de très hautes fréquences de commutation, le transistor employé est souvent de type MOSFET. Cependant, ce composant ne supporte pas les tensions élevées. Pour palier cet inconvénient, les solutions actuelles consistent à employer deux sources de courant commandées, l'une située sur la ligne d'alimentation positive du bus continu d'alimentation et l'autre sur la ligne d'alimentation négative du bus continu d'alimentation, chacune des sources comportant une inductance, une diode et un transistor de type MOSFET.

Le but de l'invention est de proposer une source de courant commandée, fonctionnant comme dans l'état de la technique, mais supportant les tensions élevées sans avoir à recourir à plusieurs transistors et à plusieurs inductances.

### Exposé de l'invention

Ce but est atteint par un convertisseur de puissance comportant :
- un module redresseur, connecté en amont à une source de tension alternative,
- un bus continu d'alimentation connecté en aval du module redresseur, sur lequel est appliquée une tension redressée et comportant une ligne d'alimentation positive et une ligne d'alimentation négative,
- un condensateur de bus, connecté à la ligne d'alimentation positive et à la ligne d'alimentation négative du bus continu d'alimentation,
- une résistance de limitation connectée en série sur la ligne d'alimentation négative du bus continu d'alimentation, en amont du condensateur de bus et destinée à limiter le courant de charge du condensateur de bus,
- une source de courant commandée comportant une inductance connectée en série sur la ligne d'alimentation positive du bus continu d'alimentation, une diode connectée à l'inductance et au condensateur de bus et un transistor connecté à un point de connexion situé entre l'inductance et la diode et à la ligne d'alimentation négative du bus continu d'alimentation,
- un dispositif de commande de Grille permettant d'appliquer une tension de Grille au transistor pour le commander à la fermeture ou à l'ouverture,
- le transistor de la source de courant commandée étant de type à effet de champ normalement fermé et réalisé dans un matériau à grande énergie de bande interdite,
- le convertisseur comportant une source de démarrage connectée en parallèle de la résistance de limitation et au dispositif de commande de Grille du transistor et agencée pour se charger par une tension négative lors du démarrage du convertisseur de puissance.

Lors du démarrage du convertisseur, aucune tension n'est disponible pour alimenter le dispositif de commande de grille du transistor de la source de courant commandée. Et comme le transistor employé est de type normalement fermé et connecté en parallèle du condensateur de bus, le condensateur de bus ne peut être chargé lors du démarrage. Il est donc nécessaire de prévoir une solution pour bloquer le transistor lors du démarrage et donc permettre la charge du condensateur de bus.

Selon une particularité, la source de démarrage comporte un condensateur et une diode Zener montés en parallèle et connectés à la ligne d'alimentation négative et au dispositif de commande de Grille du transistor.

Selon une autre particularité, la source de démarrage comporte également une résistance et une diode connectées d'une part à la diode Zener et d'autre part à la résistance de limitation.

Selon une autre particularité, la source de démarrage est connectée au dispositif de commande de Grille du transistor via une résistance.

Selon une autre particularité, le convertisseur de puissance comporte un interrupteur connecté en parallèle de la résistance de limitation.

Selon l'invention, le transistor est de type JFET et est par exemple fabriqué en carbure de silicium ou en nitrure de gallium.

### Brève description des figures

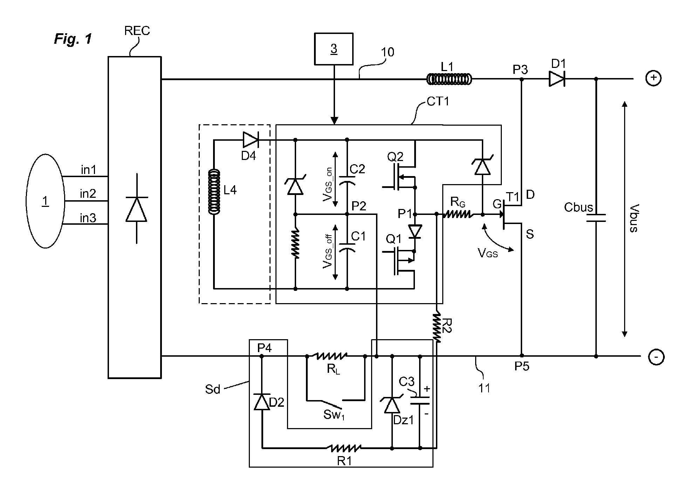

D'autres caractéristiques et avantages vont apparaître dans la description détaillée qui suit faite en regard de la figure 1 annexée qui représente le convertisseur de puissance de l'invention doté d'une source de courant commandée.

### Description détaillée d'au moins un mode de réalisation

En référence à la figure 1, un convertisseur de puissance comporte par exemple :
- trois phases d'entrée in1, in2, in3 connectées à un réseau de distribution électrique 1,
- un module redresseur REC connecté à une source de tension alternative, par exemple le réseau de distribution électrique, le module redresseur REC étant composé en règle générale d'un pont de diodes qui permet de redresser la tension alternative fournie par la source de tension,
- un bus continu d'alimentation recevant la tension redressée par le module redresseur REC et doté d'une ligne d'alimentation positive 10 et d'une ligne d'alimentation négative 11,
- un condensateur de bus Cbus connecté d'une part à la ligne d'alimentation positive 10 du bus continu d'alimentation et d'autre part à la ligne d'alimentation négative 11 du bus continu d'alimentation et destiné à maintenir constante la tension Vbus du bus continu d'alimentation,
- une résistance de limitation RL, appelée également résistance de précharge, montée en série sur la ligne d'alimentation négative 11, entre le module redresseur REC et le condensateur de bus Cbus et en parallèle de laquelle est monté un interrupteur Sw₁. Cette résistance de limitation RL est active au démarrage pendant la phase de charge du condensateur de bus Cbus. Dans le convertisseur de puissance, elle permet de limiter le courant d'entrée à travers le module redresseur REC. Une fois le condensateur de bus Cbus chargé, la résistance de limitation RL est court-circuitée par l'interrupteur Sw₁ monté en parallèle.

Un convertisseur de puissance tel qu'un variateur de vitesse comporte également en sortie un module onduleur connecté au bus continu d'alimentation, en aval du condensateur de bus Cbus, et comportant n phases et ayant au moins 2n transistors de commutation.

Il est également connu de pourvoir un convertisseur de puissance d'une source de courant commandée destinée à contrôler le courant circulant sur le bus continu d'alimentation afin de réduire les harmoniques du courant d'entrée du convertisseur et donc d'agir sur le THDi. De manière connue, une source de courant commandée comporte une inductance L1 connectée en série sur la ligne d'alimentation positive 10 du bus continu d'alimentation, en amont du condensateur de bus Cbus, une diode D1 connectée sur la ligne d'alimentation positive 10 du bus à ladite inductance L1 et au condensateur de bus Cbus et un bras de commutation doté d'un transistor T1 connecté d'une part au point de connexion P3 situé entre l'anode de la diode D1 et l'inductance L1 et d'autre part à la ligne négative du bus continu d'alimentation. Le transistor T1 est ainsi connecté en parallèle de la diode D1 et du condensateur de bus Cbus.

Dans la source de courant commandée, le transistor T1 employé est du type à effet de champ (FET pour "Field Effect Transistor"). Un transistor à effet de champ tel que par exemple un JFET ou un MOSFET est un interrupteur électronique de puissance connu qui comporte une Grille de commande (G) dont la fonction est d'autoriser ou non le passage d'un courant entre un Drain (D) et une Source (S). Un tel transistor est dit de type normalement fermé (ou "Normally ON") si son chemin Drain-Source est passant ou conducteur en l'absence de tension de commande V_{GS}. En présence d'une tension de commande V_{GS} négative entre sa Grille G et sa Source S, le transistor à effet de champ normalement fermé est commandé à l'ouverture. Un transistor de type JFET est commandé à l'ouverture en appliquant une tension Grille-Source V_{GS} par exemple au moins égale à -15 Volts, et un transistor de type MOSFET avec une tension V_{GS} par exemple nulle ou négative.

Les transistors à effet de champ employés dans le convertisseur de puissance de l'invention seront fabriqués dans un matériau à grande énergie de bande interdite (appelé également "matériau à grand gap" ou "wide-band gap material") tel que par exemple le carbure de silicium ou le nitrure de gallium. De manière connue, un transistor JFET, réalisé dans un matériau à grande énergie de bande interdite et de type normalement fermé, présente les avantages d'être plus rapide à commuter, de générer moins de pertes en conduction à l'état passant (faible résistance R_{DSon} à l'état passant), d'avoir une meilleure tenue en tension et en température. Dans la suite de la description et sur la figure 1, le transistor T1 utilisé est par exemple de type JFET normalement fermé.

Le transistor à effet de champ T1 de type normalement fermé est commandé grâce à un dispositif spécifique de commande CT1 de Grille, via une résistance de Grille R_{G}. Le dispositif de commande CT1 de Grille est alimenté grâce à un système d'alimentation auxiliaire connecté à la ligne d'alimentation positive 10 et à la ligne d'alimentation négative 11 du bus continu d'alimentation et permet d'appliquer au transistor une tension de Grille V_{G} pour commander le transistor T1 à la fermeture ou à l'ouverture. En plus de l'alimentation, le dispositif de commande CT1 reçoit d'un système central de commande 3 un signal de commande à modulation de largeur d'impulsion (PWM en anglais pour "Pulse Width Modulation") respectant une loi de commande exécutée par le système central de commande 3.

Sur la figure 1, le drain (D) du transistor T1 est connecté à la ligne d'alimentation positive 10, au point de connexion P3 situé entre l'inductance L1 et l'anode de la diode D1 et sa source (S) est connectée à la ligne d'alimentation négative 11 du bus continu d'alimentation, en particulier au point de connexion P5 situé entre la résistance de limitation RL et le condensateur de bus Cbus.

En référence à la figure 1, le dispositif de commande CT1 de Grille comporte notamment deux transistors Q1, Q2 de type MOSFET reliés en série par l'intermédiaire d'un point milieu de connexion P1 connecté à la Grille G du transistor T1, via la résistance de Grille R_{G}, et un ensemble de deux condensateurs C1, C2 montés également en série. Un point milieu de connexion P2 situé entre les deux condensateurs C1, C2 est connecté à la ligne négative 11 du bus continu d'alimentation, c'est-à-dire à la Source S du transistor T1. Le transistor Q1 du dispositif de commande est du type normalement fermé tandis que le transistor Q2 du dispositif de commande est du type normalement ouvert. Le système d'alimentation auxiliaire alimente le dispositif de commande de Grille à travers une diode D4 et une inductance L4 qui constitue le secondaire du transformateur du système d'alimentation auxiliaire en générant les tensions V_{GS_ON} et V_{GS_OFF} nécessaires respectivement à la fermeture et à l'ouverture du transistor T1. A partir des tensions V_{GS_ON} et V_{GS_OFF}, les transistors Q1, Q2 appliquent la tension de Grille V_{G} au transistor JFET pour le commander à l'ouverture ou à la fermeture, selon le signal de commande envoyé par le système central de commande 3.

Selon l'invention, le convertisseur comporte également une source de démarrage Sd activée lors du démarrage du convertisseur de puissance pour commander le transistor T1 à l'ouverture le temps du démarrage et ainsi permettre la charge du condensateur de bus Cbus.

Cette source de démarrage Sd comporte un condensateur C3 connecté à la Source S du transistor T1 et au point milieu P1 des deux transistors Q1, Q2 du dispositif de commande CT1 de Grille via une résistance R2, formant une impédance entre le point P1 et la source de démarrage Sd. La source de démarrage Sd comporte également une diode Zener Dz1 connectée également à la Source S du transistor T1 et au point milieu P1 via la résistance R2 et permettant de limiter la tension de charge du condensateur C3. Par ailleurs, la source de démarrage Sd comporte également une résistance R1 et une diode D2 connectées d'une part à la diode Zener Dz1 et au condensateur C3 et d'autre part au point de connexion P4 qui est situé sur la ligne d'alimentation négative 11, entre la résistance de limitation RL et le module redresseur REC. La résistance R1 permet de limiter le courant qui traverse les diodes D2 et Dz1.

La source de démarrage Sd est ainsi connectée en parallèle de la résistance de limitation RL et au dispositif de commande CT1 de Grille.

Le fonctionnement du convertisseur de puissance de l'invention est explicité ci-dessous.

A l'état initial, aucune tension d'entrée n'est appliquée sur le bus continu d'alimentation. La tension du bus continu d'alimentation Vbus est donc nulle et le système d'alimentation auxiliaire n'est pas activé. Le transistor T1 de la source de courant commandée est à l'état fermé.

Au démarrage du variateur de vitesse, la tension V_{DS} entre Drain et Source du transistor T1 est nulle étant donné que le transistor T1 est en conduction. Le système d'alimentation auxiliaire n'est pas encore activé et ne peut donc fournir une tension suffisante en vue du blocage du transistor. Comme le bras de commutation qui comporte le transistor T1 court-circuite le condensateur de bus Cbus, le courant qui traverse ce bras de commutation et la résistance de limitation RL entraîne une chute de tension aux bornes de la résistance de limitation RL. Cette chute de tension aux bornes de la résistance de limitation RL entraîne le chargement du condensateur C3, créant une tension négative entre la Grille G et la Source S du transistor T1. Lorsque la tension aux bornes du condensateur C3 devient inférieure à une tension seuil correspondant à la tension de blocage du transistor T1, le transistor T1 est commuté à l'état ouvert, permettant alors la charge du condensateur de bus Cbus.

Une fois que le système d'alimentation auxiliaire a terminé son démarrage, il peut alimenter le dispositif de commande CT1 de grille du transistor T1. Le transistor T1 peut donc être commandé directement à l'ouverture par son dispositif de commande CT1. Une fois le condensateur de bus Cbus chargé, la résistance de limitation RL peut être court-circuitée par l'interrupteur Sw₁ lors du fonctionnement normal du variateur de vitesse.

Par un montage simple et peu onéreux, il est ainsi possible de s'affranchir des contraintes liées à l'emploi d'un composant normalement fermé dans une source de courant commandée d'un variateur de vitesse.

## Revendications

1. Convertisseur de puissance comportant :
- un module redresseur (REC), connecté en amont à une source de tension alternative,
- un bus continu d'alimentation connecté en aval du module redresseur (REC), sur lequel est appliquée une tension redressée et comportant une ligne d'alimentation positive (10) et une ligne d'alimentation négative (11),
- un condensateur de bus (Cbus), connecté à la ligne d'alimentation positive (10) et à la ligne d'alimentation négative (11) du bus continu d'alimentation,
- une résistance de limitation (RL) connectée en série sur la ligne d'alimentation négative (11) du bus continu d'alimentation, en amont du condensateur de bus (Cbus) et destinée à limiter le courant de charge du condensateur de bus (Cbus),
- une source de courant commandée comportant une inductance (L1) connectée en série sur la ligne d'alimentation positive (10) du bus continu d'alimentation, une diode (D1) connectée à l'inductance et au condensateur de bus (Cbus) et un transistor (T1) connecté à un point de connexion situé entre l'inductance (L1) et la diode (D1) et à la ligne d'alimentation négative (11) du bus continu d'alimentation,
- un dispositif de commande (CT1) de Grille permettant d'appliquer une tension de Grille au transistor (T1) pour le commander à la fermeture ou à l'ouverture,
**caractérisé en ce que** :
- le transistor (T1) de la source de courant commandée est de type à effet de champ normalement fermé et est réalisé dans un matériau à grande énergie de bande interdite, et **en ce que**
- le convertisseur comporte une source de démarrage (Sd) connectée en parallèle de la résistance de limitation (RL) et au dispositif de commande (CT1) de Grille du transistor (T1) et agencée pour se charger par une tension négative lors du démarrage du convertisseur de puissance.

2. Convertisseur de puissance selon la revendication 1, **caractérisé en ce que** la source de démarrage (Sd) comporte un condensateur (C3) et une diode Zener (Dz1) montés en parallèle et connectés à la ligne d'alimentation négative (11) et au dispositif de commande (CT1) de Grille du transistor (T1).

3. Convertisseur de puissance selon la revendication 2, **caractérisé en ce que** la source de démarrage (Sd) comporte également une résistance (R1) et une diode (D2) connectées d'une part à la diode Zener (Dz1) et d'autre part à la résistance de limitation (RL).

4. Convertisseur de puissance selon la revendication 1, **caractérisé en ce que** la source de démarrage (Sd) est connectée au dispositif de commande de Grille (CT1) du transistor (T1) via une résistance (R2).

5. Convertisseur de puissance selon la revendication 1, **caractérisé en ce qu'il** comporte un interrupteur (Sw₁) connecté en parallèle de la résistance de limitation (RL).

6. Convertisseur de puissance selon la revendication 1, **caractérisé en ce que** le transistor est de type JFET.

7. Convertisseur de puissance selon la revendication 1, **caractérisé en ce que** le transistor est fabriqué en carbure de silicium ou nitrure de gallium.
